(19) **Europäisches Patentamt / European Patent Office / Office européen des brevets**

(11) **EP 2 299 555 A1**

(12) **EUROPEAN PATENT APPLICATION**

(43) Date of publication:
**23.03.2011 Bulletin 2011/12**

(51) Int Cl.:
**H02J 3/24** (2006.01)

(21) Application number: **09170800.8**

(22) Date of filing: **21.09.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **ABB Research Ltd.**
**8050 Zürich (CH)**

(72) Inventors:
• **Korba, Petr**
**5300 Turgi (CH)**

• **Berggren, Bertil**
**72476 Västeras (SE)**
• **Majumder, Rajat**
**72344 Västeras (CH)**
• **Ray, Swakshar**
**72344 Västeras (SE)**

(74) Representative: **ABB Patent Attorneys**
**C/o ABB Schweiz AG**
**Intellectual Property (CH-LC/IP)**
**Brown Boveri Strasse 6**
**5400 Baden (CH)**

(54) **Fault tolerant damping of electromechanical oscillations in power systems**

(57) A fault-tolerant method and system of controlling electromechanical oscillations in a power system. The system of controlling comprises at least one phasor measurement unit (58, 60, 62, 64) obtaining phasor data signals including oscillating mode signals, at least one wide area control system (66) receiving the phasor data signals from the phasor measurement unit, and at least one actuating device (80, 82, 84) for receiving a control signal from the wide area control system. Specifically, the wide area control system performs the fault tolerant control method of the present invention, wherein information about each critical oscillatory mode of an oscillation is extracted from a model, selected residues for each critical oscillatory mode are grouped together, and a partial damping controller is designed for each selected critical oscillatory mode using residues from the same group. A multivariable damping controller is produced and applied to one or more actuating devices in the power system to control electromechanical oscillations.

Fig. 8

**Description**

FIELD OF THE INVENTION

The invention relates to the field of damping multimode electromechanical oscillations in electric power systems interconnecting a plurality of generators and consumers.

BACKGROUND OF THE INVENTION

In the wake of the ongoing deregulation of electric power markets, load transmission and transfer of power from distant generators to local consumers has become common practice. As a consequence of the competition between utilities and the emerging need to optimize assets, increased amounts of electric power are transmitted through the existing networks, invariably causing congestion, transmission bottlenecks and/or oscillations of parts of the power transmission systems. In this regard, electrical transmission networks are highly dynamic. In electric power systems comprising several alternating current generators, electromechanical oscillations generally have a frequency of less than a few Hz and considered acceptable as long as they decay. They are initiated by the normal small changes in the system load, and they are a characteristic of any power system.

However, insufficiently damped oscillations may occur when the operating point of the power system is changed, for example, due to a new distribution of power flows following a connection or disconnection of generators, loads and/or transmission lines. Similarly, the interconnection of several existing power grids may give rise to insufficiently damped oscillations, even if they do not individually present any poorly damped oscillations prior to their interconnection. In these cases, an increase in the transmitted power of a few MW may make the difference between stable oscillations and unstable oscillations which have the potential to cause a system collapse or result in loss of synchronism, loss of interconnections and ultimately the inability to supply electric power to the consumer. Appropriate monitoring of the power system can help a network operator to accurately assess power system states and avoid a total blackout by taking appropriate actions such as the connection of specially designed oscillation damping equipment.

Electric power transmission and distribution systems or networks comprise high-voltage tie lines for connecting geographically separated regions, medium-voltage lines, and substations for transforming voltages and for switching connections between lines. For managing the network, it is known in the art to utilize Phasor Measurement Units (PMU). PMUs provide time-stamped local information about the network, in particular currents, voltages and load flows. Multiple phasor measurements collected throughout the network by PMUs and processed at a central data processor, provide a snapshot of the overall electrical state of the power system.

Patent Application EP-A 1 737 098, describes the combined voltage or power flow control and damping of single mode electromechanical oscillations in an electric power system by Flexible Alternating-Current Transmission System (FACTS) devices. To this end, information about a state or operating point of the power system is generated from suitable second system signals, and a control parameter of a FACTS controller is derived therefrom. The control parameter and first system signals are used in the calculation of a control command defining the settings of the FACTS device. Following a change in the state of the power system such as a change in the topology of a transmission network, poorly damped or even unstable oscillations are avoided by appropriate retuning of the control parameter of the damping or stabilizing equipment.

FACTS device are actuators which comprise power semiconductor components and include Static-Var Compensators (SVCs), Unified Power Flow Controller (UPFC), Thyristor-Controlled Series Capacitors (TSCSs), Thyristor Controlled Phase-Shifting Transformers (TCPSTs), impedance modulators, and series compensation capacitors.

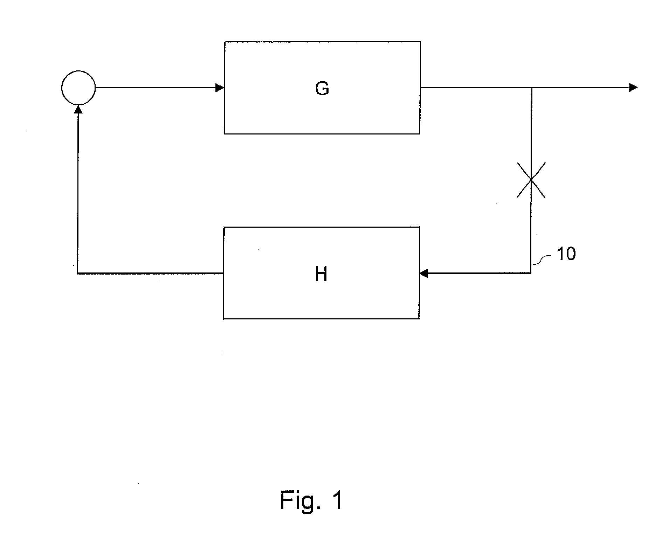

Such known technologies enable damping control of a selected single mode oscillation based on a single feedback signal. This is known as a single-input single-output solution (SISO). Figure 1 schematically shows a standard SISO control loop having a power system G and a stabilising controller H. An output 10 from the power system is fed into the controller thereby forming a feedback loop. Problematically, failure of an actuator or a measurement unit leads to disconnection of the single closed loop, as illustrated with a cross in Figure 1. Consequently, the behaviour of the system is equivalent to a system without any control features.

It has been found that electromechanical oscillations in electric power networks also take the form of a superposition of multiple oscillatory modes. These multiple oscillatory modes create similar problems to the single mode oscillations and thus have the potential to cause a collapse of the electric power network.

It is known to utilise a Power Oscillation Damping (POD) controller to stabilize a single selected oscillatory mode. (Such a controller may also be known as a partial POD controller.) However, this may have the effect of destabilizing the other oscillatory modes present, for example, a second critical mode, which is subsequently damped less than the first critical mode. Thus, it is possible that the second critical mode (and any other mode) is negatively impacted by the performance of an SISO POD controller which is tuned to improve the damping of the first critical oscillatory mode.

Further, known active techniques to rectify faults in this field require the fault to be detected, isolated and then the controller must be reconfigured.

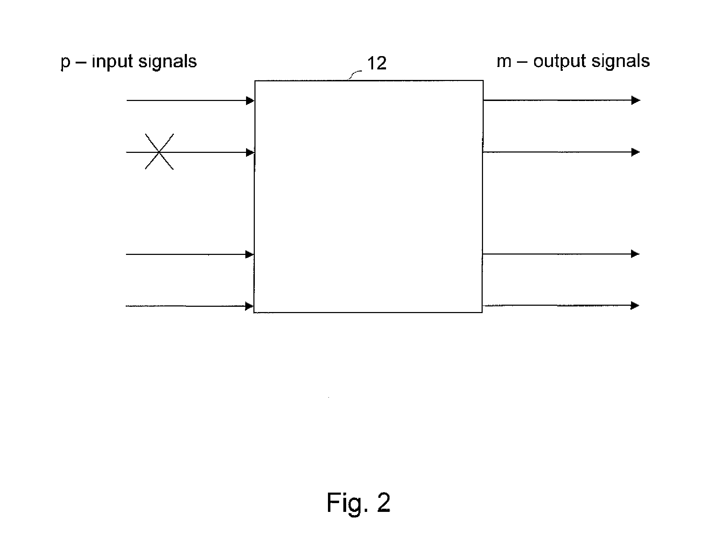

Figure 2 illustrates a standard multiple-input multiple-output (MIMO) closed loop control having p input signals and m output signals. Failure of an actuator or a measurement unit 12, as illustrated with a cross in Figure 2, does not lead to complete disconnection from the power system. Standard control techniques based on state space model representation and can be applied to solve some failures involving MIMOs. Although the remaining signals may be used for control when combined in a mutually supportive manner, unfortunately, this does not necessarily occur.

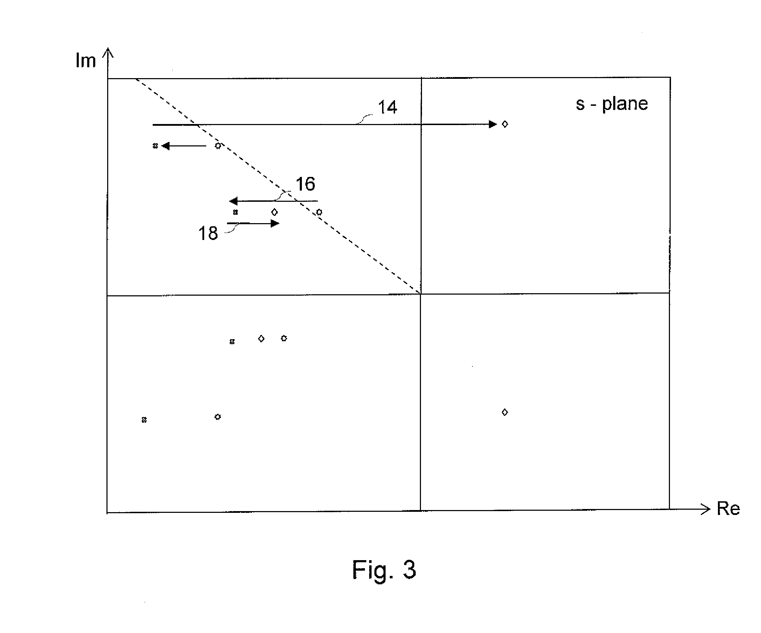

With reference to the known technologies which enable damping control of oscillations, Figure 3 shows a complex frequency domain graph of the effect of a known MIMO POD closed loop controller. In such a complex frequency domain graph (in the s-plane), the x-axis represents the real part of s (which is absolute modal damping) and the γ-axis represents the imaginary part of s (which is modal frequency in radians per second) where the s-plane transforms are commonly known as Laplace transforms hence in the s-plane, multiplying by s has the effect of differentiating in the corresponding real time domain and dividing by s has the effect of integrating. Each point on the s-plane represents an eigenvalue or a transfer function pole. In Figure 3, the pole locations in an open loop case are represented by star marks, the pole locations in a desired closed loop case are represented by crosses and the pole locations in a faulty closed loop case are represented by diamond marks. The scenario illustrated in Figure 3 is a failure of a measurement unit leading to a loss of stability. The arrow 14 furthest from the x-axis reaching the right half-plane of the s-plane graphically represents the instability of one critical mode caused by a failure of a measurement used as a feedback signal for a stabilizing damping controller. The arrow 16 immediately below represents the improvement of damping of the critical oscillatory mode with a hypothetical optimal damping controller being active (the change of the eigenvalue is directed towards the left half of the complex plane). Similarly, the arrow 18 closest the x-axis represents the deterioration in damping of another critical oscillatory mode in case of a measurement failure, which is indicated by the change of the eigenvalue towards the right half of the complex plane.

The article "Application of FACTS Devices for Damping of Power System Oscillations", by R. Sadikovic et al., proceedings of the Power Tech conference 2005, June 27-30, St. Petersburg RU, the disclosure of which is incorporated herein for all purposes by way of reference. The article addresses the selection of the proper feedback signals and the subsequent adaptive tuning of the parameters of a POD controller in case of changing operating conditions. It is based on a linearized system model, the transfer function G(s) of which is being expanded into a sum of N residues:

$$G(s) = \sum_{i=1}^{N} \frac{R_i}{(s - \lambda_i)}$$

The N eigenvalues $\lambda_i$ correspond to the N oscillation modes of the system, whereas the residue $R_i$ for a particular mode gives the sensitivity of that mode's eigenvalue to feedback between the output and the input of the system.

DESCRIPTION OF THE INVENTION

It is therefore an objective of the invention to provide a passive fault-tolerant power oscillation damping controller in order to minimise the negative impact of a failure in a control loop. These objectives are achieved by a method and a controller for damping multiple electromechanical oscillations in a power system according to the claims 1 and 5.

According to a first aspect of the present invention, there is provided a fault-tolerant method of controlling electromechanical oscillations in a power system, comprising extracting information about each critical oscillatory mode of an oscillation from a model, wherein said step of extracting further comprises mode selection and residue selection subject to maximisation of the magnitude of the residues over all input and output signals of the model, grouping the selected residues for each critical oscillatory mode, designing a partial damping controller for each selected critical oscillatory mode using residues from the same group, applying a superposition operation to each partial damping controller to produce a multivariable damping controller, and applying the multivariable damping controller to one or more actuating devices in the power system to control electromechanical oscillations.

Preferably, the model is determined through linearization or identification from phasor measurements.

Furthermore, the step of grouping further comprises ranking the selected residues by residue angle magnitude, and grouping the selected residues with other selected residues having a similar residue angle.

Preferably, the similar residue angle is within ±30° from the maximum residue angle. The step of mode selection may further comprise obtaining modal controllability and modal observability, which are generally understood to be covered by the term "residue".

According to a second aspect of the invention, there is provided a fault-tolerant controller of electromechanical oscillations in a power system, the controller comprising at least one phasor measurement unit obtaining phasor data signals including oscillating mode signals, at least one wide area control system receiving the phasor data signals from the phasor measurement unit, at least one actuating device for receiving a control signal from the wide area control system, and wherein the wide area control system performs the fault tolerant control method of the first aspect.

Preferably, the fault-tolerant controller further comprises a network multiplexer, wherein the network multiplexer receives signals from the at least one phasor measurement unit, and wherein the wide area control system is located with one actuating device and has a bi-directional direct connection to the network multiplexer, and at least one further actuating device.

In an alternative embodiment, a wide area control system is located with each actuating device, and wherein each wide area control system has a direct connection with each phasor measurement unit.

In a further alternative embodiment, the fault-tolerant controller further comprises a network multiplexer, wherein the network multiplexer receives signals from the at least one phasor measurement unit, and wherein a wide area control system is located with each actuating device and has a bi-directional direct connection to the network multiplexer, and at least one further actuating device.

Preferably, each of the phasor measurement units, the wide area control systems and the actuating devices have a time stamping means.

According to a further aspect of the invention, there is provided a computer program for controlling electromechanical oscillations in a power system, which computer program is loadable into an internal memory of a digital computer and comprises computer program code means to make, when said program is loaded in said internal memory, the computer execute the functions of the controller according to the second aspect of the invention.

BRIEF DESCRIPTION OF THE DRAWINGS

The subject matter of the invention will be explained in more detail in the following text with reference to preferred exemplary embodiments which are illustrated in the attached drawings, of which:

Figure 1 schematically illustrates a standard SISO control loop.

Figure 2 schematically illustrates a standard MIMO control loop.

Figure 3 graphically illustrates the impact in the complex frequency domain of a known partial POD controller which utilizes local feedback signals for control according to the prior art.

Figure 4 is a flow diagram of the design method of the controller of the present invention.

Figure 5A - Figure 5C schematically illustrate various embodiments of the controller of the present invention.

Figure 6 graphically illustrates the impact in the complex frequency domain of the passive fault tolerant POD controller of the present invention.

Figure 7 shows a plot of a damped disturbance in time.

Figure 8 schematically illustrates a first hardware configuration of a power network in accordance with the present invention.

Figure 9 schematically illustrates an alternative embodiment of a first hardware configuration of a power network in accordance with the present invention.

Figure 10 schematically illustrates a second hardware configuration of a power network in accordance with the present invention.

Figure 11 schematically illustrates a third hardware configuration of a power network in accordance with the present invention.

Throughout the figures, like features are indicated with the same reference numeral.

DETAILED DESCRIPTION OF PREFERRED EMBODIMENTS

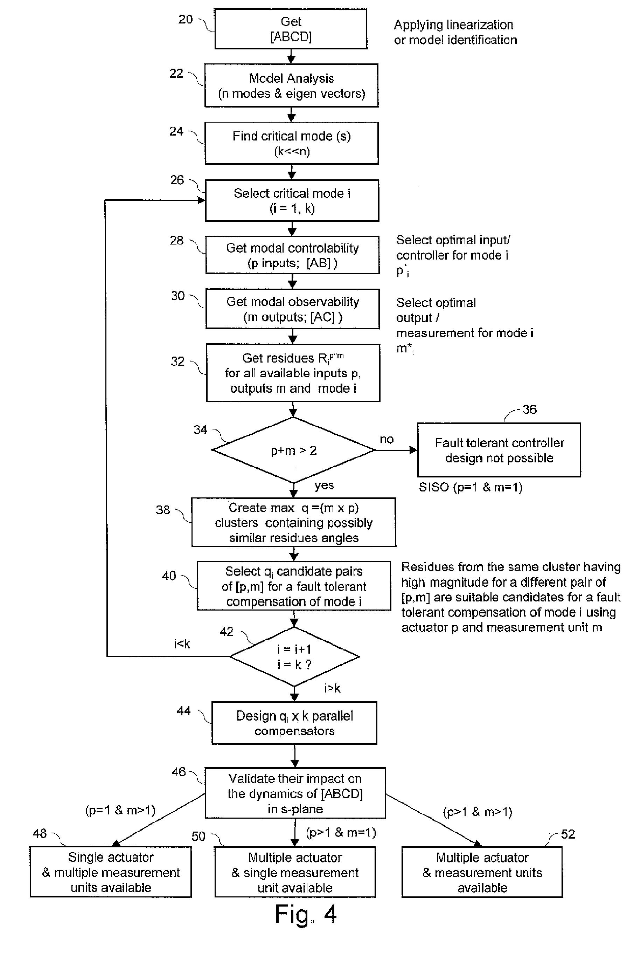

Figure 4 shows a flow diagram of the method steps to enable fault tolerant damping control of multiple oscillatory modes in a power system. The following derivation of the algorithm of the present invention is included for completeness. In a first step 20 of model identification, a mathematical model of a power system

$$\dot{x} = f(x,t)$$
$$y = g(x,t) \tag{1}$$

is linearized around a point of interest $x = x_0$, thus resulting in

$$\Delta \dot{x}(t) = A\Delta x(t) + B\Delta u(t)$$
$$\Delta y(t) = C\Delta x(t) + D\Delta u(t) \tag{2}$$

(for sake of simplicity and without lost of generality of the obtained results, the direct through matrix D can be assumed to be a zero matrix in the equations written from here on).

In a second step 22, modal analysis transforms the model into modal coordinates obtaining n modes or eigenvalues $\lambda_k$ and corresponding left $l_k$ and right $r_k$ eigenvectors ($k$ = 1, ..., n) fulfilling (3) and (4).

$$\det(A - \lambda_k I) = 0 \tag{3}$$

$$Ar_k = r_k \lambda_k$$

Note that if the state space matrix A has n distinct eigenvalues, A, R and L are respectively the diagonal matrix of eigenvalues and matrices of right and left eigenvectors.

$$AR = R.\Lambda$$
$$L^T A = \Lambda L^T \tag{4}$$
$$R = L^{-T}$$

The following similarity transformation (5) is introduced and (2) is rewritten as (6)

$$\Delta x = Tz \tag{5}$$

$$\dot{z}(t) = T^{-1}ATz(t) + T^{-1}B\Delta u(t)$$
$$\Delta y(t) = CTz(t) \tag{6}$$

Selecting the transform matrix T equal R (the matrix of right eigenvectors of A),

i.e. $\Delta x = Rz$, (6) becomes (7).

$$\dot{z}(t) = \Lambda z(t) + \tilde{B}\,\Delta u(t)$$

where $\tilde{C} = CR$, $\tilde{B} = LB$ and $\lambda_k = \alpha_k + i\omega_k$ (7)

$$\Delta y(t) = \tilde{C}\,z(t)$$

In the third step 24 of Figure 4, the critical modes are found (for k << n). In the fourth step 26, the critical mode i is selected. The set of all complex eigenvalues $\lambda_k$ characterizes oscillations. Rather than the absolute damping $\alpha_k$, a practical measure for the assessment of the damping of oscillations is the relative damping $\xi_k$ given by (8), which yields normalized values in percent $\xi_k \in \langle -100; +100\rangle$.

$$\xi_k = -100\frac{\alpha_k}{\|\lambda_k\|}\%$$  (8)

A working power system is stable, this means in terms of the relative damping (8) that condition (9) holds; it is useful to sort all $\xi_k$ (with all corresponding eigenvalues and eigenvectors A, R and L). Denote the minimum as $\xi_1$ and call it (with the corresponding frequency $\omega_k$) the dominant mode.

$$\min_k \xi_k > 0, \quad k = 1, \dots, n$$  (9)

All the other modes of interest are those having the lowest indices (corresponds to poor damping). As indicated in the fifth 28 and sixth 30 flow diagram steps, it is necessary to obtain modal controllability and observability and to select the optimal input and output for mode I respectively.

It should be noted that in complex analysis, the "residue" is a complex number which describes the behavior of line integrals of a meromorphic function around a singularity. Residues may be used to compute real integrals as well and allow the determination of more complicated path integrals via the residue theorem. Each residue represents a product of modal observability and controllability.

For the/any selected mode of interest $\lambda_k$, the following set of residues are calculated in the seventh step 32; i.e. a matrix RES of the dimension m x r (which may also be denoted $R_i$ p*m) with respect to all available inputs p, and outputs m, and mode i, as follows:

$$RES(\lambda_k) = \tilde{C}(:,k)\,\tilde{B}(k,:) = \left[\, res_{ji}(\lambda_k) \,\right]^{mxr}$$  (10)

In the eighth step 34 of Figure 4, it is determined whether the controller is a partial POD controller. Namely, it is determined whether the sum of the inputs p and the outputs m is greater than 2. Thus, where the sum of the inputs p and the outputs m is 2 (ie. p is 1 and m is 1), then the controller is a partial POD controller and a fault tolerant controller design of the present invention is not possible 36. However, where the sum of the inputs and outputs is greater than two, showing that the controller is MIMO, MISO or SIMO, then the method continues to the next step.

In the ninth step 38, of the flow diagram, it may be envisaged that a controller (for a single mode) is designed as follows:

For the mode of interest, say $\lambda_1$, select the input i and output j so that the corresponding single complex residue $res_{ij}(\lambda_1)$ has the maximal norm among all m x r RES($\lambda_1$):

$$\max_{i,\,j} \left\| res_{ji}(\lambda_1) \right\| = \left\| res_{ji}^{\max}(\lambda_1) \right\| \qquad (11)$$

Further, $i$ and $j$ are stored. In this step, a maximum of q = (m x p) clusters are created containing possibly similar residue angles.

The article "Application of FACTS Devices for Damping of Power System Oscillations", by R. Sadikovic et al., proceedings of the Power Tech conference 2005, June 27-30, St. Petersburg RU, as mentioned previously, shows how to design a partial POD controller based on the known sensitivity of the eigenvalue $\lambda_k$ given by (12) subject to closing a control loop between a selected input $i$ and output $j$ via a controller H(s).

$$\Delta\lambda_k = res_{ji}^{k} H(\lambda_k) \qquad (12)$$

With reference to the tenth step 40 on Figure 4, qi candidate pairs of [p, m] are selected for a fault tolerant compensation of mode i. Specifically, residues from the same cluster having high magnitude for a different pair of [p, m] are suitable candidates for a fault tolerant compensation of mode i using actuator p and measurement unit m.

All other residues of the same mode $\lambda_1$ (for all p inputs and m outputs a part of the already selected input $i$ and output $j$) are grouped with respect to the similarlity of their angles. The largest residue angle is picked from the same group in which the selected $\angle res^{\max}(\lambda_1)$ belongs. The corresponding i and j are stored. In practice, any angle from within the range about $\pm30°$ of $\angle res^{\max}(\lambda_1)$ can be considered as similar.

At step eleven 42 of Figure 4, a further mode of interest is selected; for example $\lambda_2, \lambda_3,...$ etc. As illustrated on Figure 4, it is then possible to return to the fourth step to repeat the fourth to tenth steps for the next mode of interest.

With reference to the twelfth step 44 in Figure 4, (qi x k) parallel compensators are designed for (k x qi) modes with optimal observability of the dominant mode.

In step thirteen 46 of Figure 4, an analytical check of the overall dynamic behaviour with all partial POD control loops is made. For example, a Nyquist diagram may be utilised or alternatively an s-plane using the model [ABCD] from the first step 20 and the designed partial POD controllers may be utilised. It is noted that (A) is known to be minimized, whilst (C) cross coupling between modes may be neglected.

The various compensators that can be designed are described in the three flow chart boxes at the terminal end of Figure 4. For (p=1 and m>1) then a single actuator and multiple measurement units are available - box 48. For (p>1 and m=1) then multiple actuators and a single measurement unit are available - box 50. For (p>1 and m>1) then multiple actuators and multiple measurement units are available - box 52.

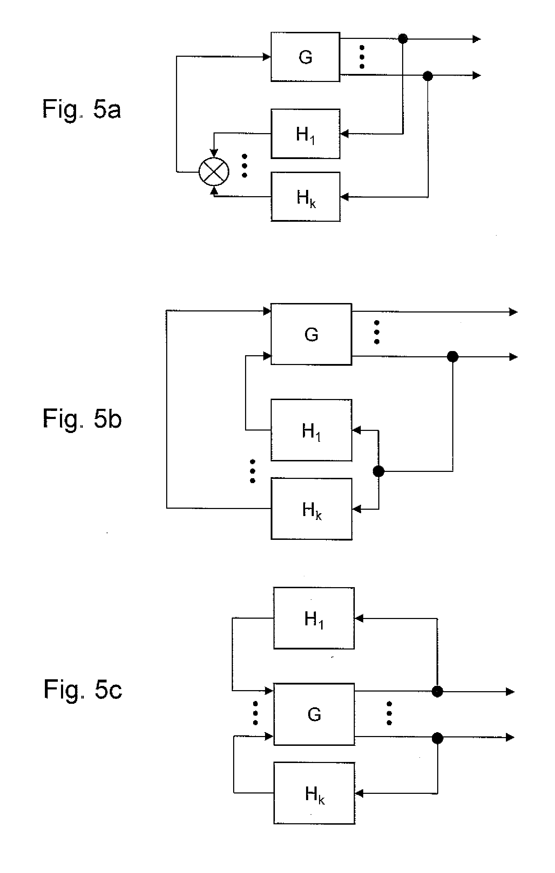

When a feedback control H(s) is applied, the eigenvalues $\lambda_i$ of the initial system G(s) are shifted, whereby this shift caused by the controller is proportional to the residue $R_i$. From the desired shifted eigenvalue location $\lambda_{i\,des}$, a controller gain K can thus be computed that is inversely proportional to the residue $R_i$. In the notation of Figures 5A through 5C, feedback controller H and power system G interconnected by measured PMU signal(s) (illustrated as arrows from G to H) and actuator(s) (illustrated as arrows from H to G), respectively.

Figures 5A through 5C schematically illustrate various embodiments of the controller of the present invention. The number of critical oscillatory modes that need to be stabilized is denoted as $k$.

Figure 5A illustrates a MISO (Multiple-Input Single-Output) controller comprising two or more partial controllers, $H_1$ to $H_k$, in parallel receiving an input from several different PMUs and yielding a single output for a single actuator, G. Each PMU provides through a corresponding controller a single input into a summing device. The single output of the summing device is input into the actuator. This arrangement damps k modes and it can be applied in cases when a number of different PMU measurements is available.

Figure 5B illustrates a SIMO (Single-Input Multiple-Output) controller comprising one PMU providing the input signal for $k$ parallel controllers designed to damp $k$ critical modes using $k$ actuators. The PMU provides a single input which is fed back through $k$ controllers and $k$ actuators to the power system. This arrangement stabilises $k$ critical modes.

Figure 5C illustrates a MIMO (Multiple-Input Multiple-Output) controller comprising two or more PMUs, controllers and actuators; each partial control loop utilizes a PMU measurement and an actuator. In this embodiment of a controller, no summation or superposition devices are required. This arrangement damps $k$ oscillating modes.

When in use, each of the above embodiments of the MIMO dynamic POD controller of the present invention functions as follows:

- Obtaining phasor data from the power system at remote PMUs and inputting signals of an initial disturbed power flow having multiple oscillations into the MIMO, SIMO and MISO POD controllers.

- Extracting each single oscillating mode within the signal by means of a mode selection and residue maximisation for each mode.

- Designing and closed-loop analysing of a partial POD controller.

- Damping of the single oscillating mode by the partial POD controller and outputting the signal from the partial POD controller.

- Feeding the selected measured signals from each partial POD controller into a summation means or any other type of signal superposition means (utilising weighted sum etc.)

- Transmitting the final damping signal (output of the resulting POD controller) to actuators.

A Nyquist diagram is used in automatic control and signal processing for assessing the stability of a system with feedback. It is represented by a graph in which the gain and phase of a frequency response are plotted. The plot of these phasor quantities shows the phase and the magnitude as the distance and angle from the origin. The Nyquist stability criterion provides a simple test for stability of a closed-loop control system by examining the open-loop system's Nyquist plot. (i.e. the same system including the designed controller, although without closing the feedback loop)

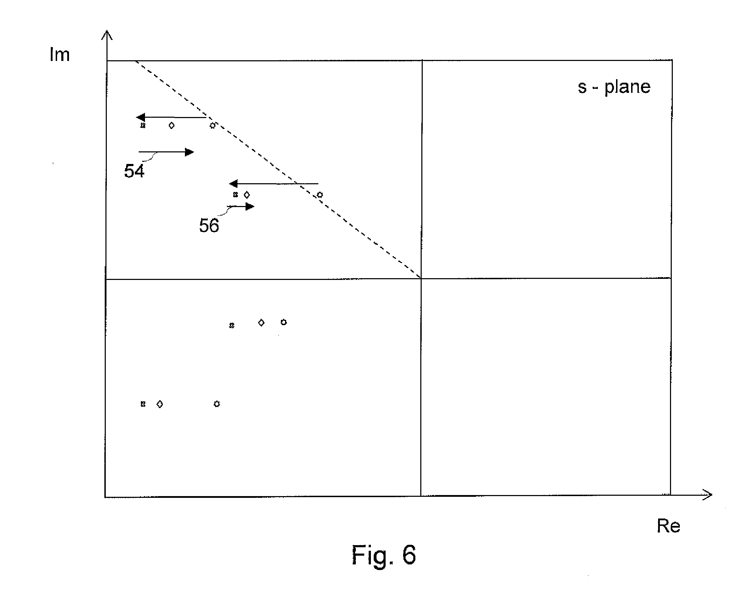

Figure 6 graphically illustrates a complex frequency domain (s-plane) of a MIMO POD controller utilizing the passive fault-tolerant control according to the present invention, thus demonstrating that the fault tolerance of a controller can be improved substantially through effectively addressing and extracting the full complex information contained in the residues matrix with respect to all critical modes and available inputs and outputs. Specifically, and in contrast to Figure 3, the resulting POD controller of the present invention can be seen to provide wide area control to stabilize a power system following a fault. Furthermore, in comparison to an open loop scenario (ie. without any control), the damping of the first critical mode 54 and second critical mode 56 is improved. With reference to Figure 6, the pole locations in an open loop case are indicated with star marks and the closed loop case when a fault occurs utilizing the passive fault-tolerant controller of the present invention is indicated with diamond marks.

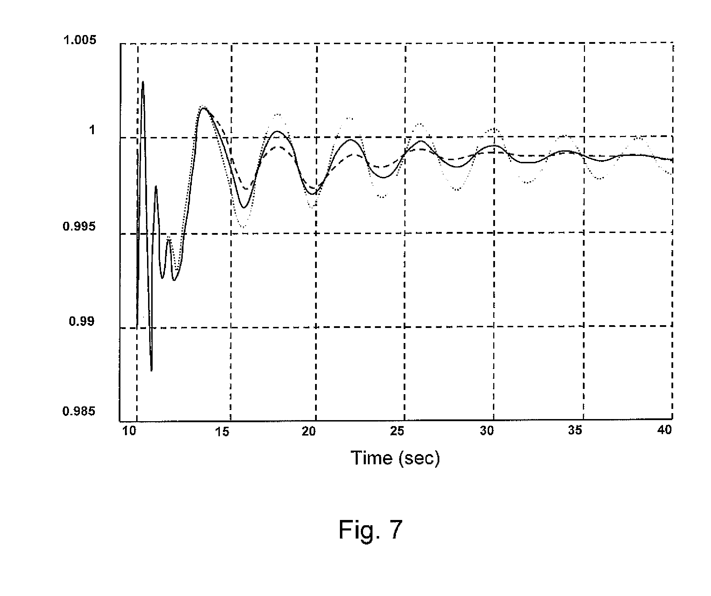

The advantageous effect of the present invention is shown graphically in Figure 7. In this graph, the x-axis represents the time in seconds, the y-axis represents power flow per unit and a fault occurs in the system at approximately 10 seconds. The dotted line, which represents an open-loop with no POD control, strongly oscillates following the disturbance. The dashed line, which represents a nominal MIMO closed loop control, oscillates less notably following the disturbance. The solid line, which represents the passive fault tolerant control of the present invention, is quickly damped following the disturbance.

The present invention may be implemented in hardware form or as software. The algorithm can be performed inside one or several PMUs, or on a wide area system (which may also be called a wide area platform) or in a FACTS controller. Three exemplary hardware embodiments of the present invention are now described:

**Configuration I**

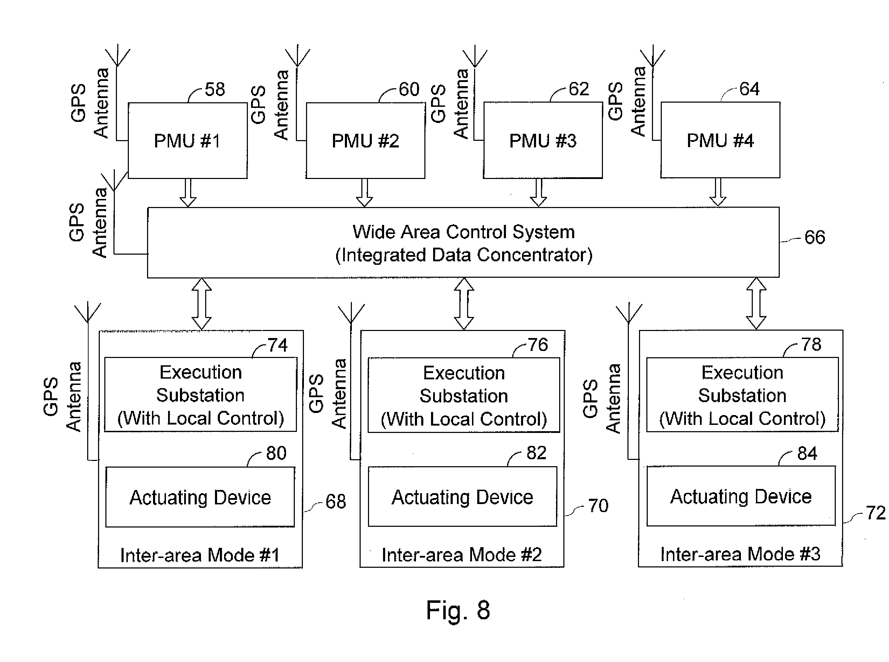

Figure 8 schematically shows a hardware configuration of a power network. Four PMUs 58, 60, 62, 64, each having a GPS antenna, are installed in the network and are each connected to a single wide area control system 66. Three inter-area mode units 68, 70, 72, are also in connection with the wide area control system 66 and each inter-area mode unit 68, 70, 72, comprises an execution substation 74, 76, 78, and an actuating device 80, 82, 84, and has a GPS antenna. The wide area control system 66 has an integrated data concentrator and a GPS antenna. The skilled person will be aware that the execution substation 74, 76, 78, functions as the summation means or signal superposition means previously referred to.

In an operational scenario in which the three inter-area modes are poorly damped and observable from multiple locations, the power network of Figure 8 functions in the following manner. Each of the PMUs 58, 60, 62, 64, obtain input signals in the form of sychronised phasors and may provide a feedback signal. PMU data is GPS time stamped and sent to the wide area control system where a MIMO control algorithm of the present invention computes a control action. Each control action is GPS time stamped and forwarded to one of the execution substations for closed loop control. (Any network component having a GPS antenna has the capacity to time stamp a signal.)

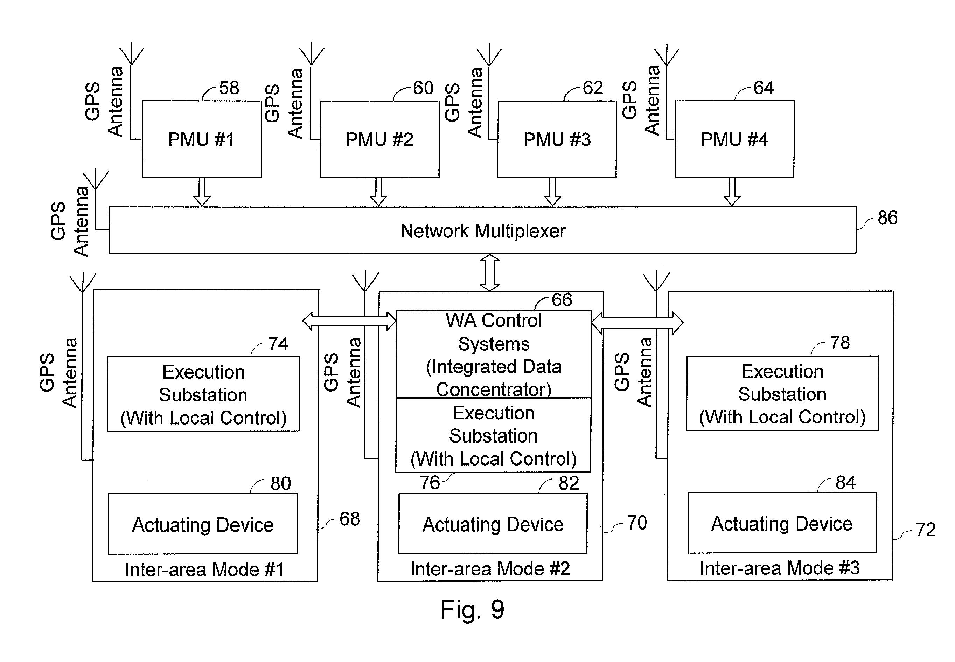

Figure 9 schematically shows an alternative embodiment of a power network for Configuration I. Four PMUs 58, 60, 62, 64, each having a GPS antenna, are installed in the network and are each connected to a single network multiplexer 86. Three inter-area mode units 68, 70, 72, are in connection with each other and the centre inter-area mode unit 70 functions as a master system for the other two slave inter-area mode units 68, 72. Each slave inter-area mode unit comprises an execution substation 74, 78, and an actuating device 80, 84, and has a GPS antenna. The master inter-area mode unit comprises an execution substation 76, an actuating device 82, a wide area (WA) control system 66 having an integrated data concentrator, and has a GPS antenna. The master inter-area mode unit 70 is in connection with the network multiplexer.

In an operational scenario in which the three inter-area modes are poorly damped and observable from multiple locations, the power network of Figure 9 functions in the following manner. Each of the PMUs may provide a feedback signal. PMU data is GPS time stamped and sent via the network multiplexer to the master inter-area mode unit. At one of the inter-area mode units a MIMO control algorithm of the present invention computes a control action for closed loop control.

## Configuration II

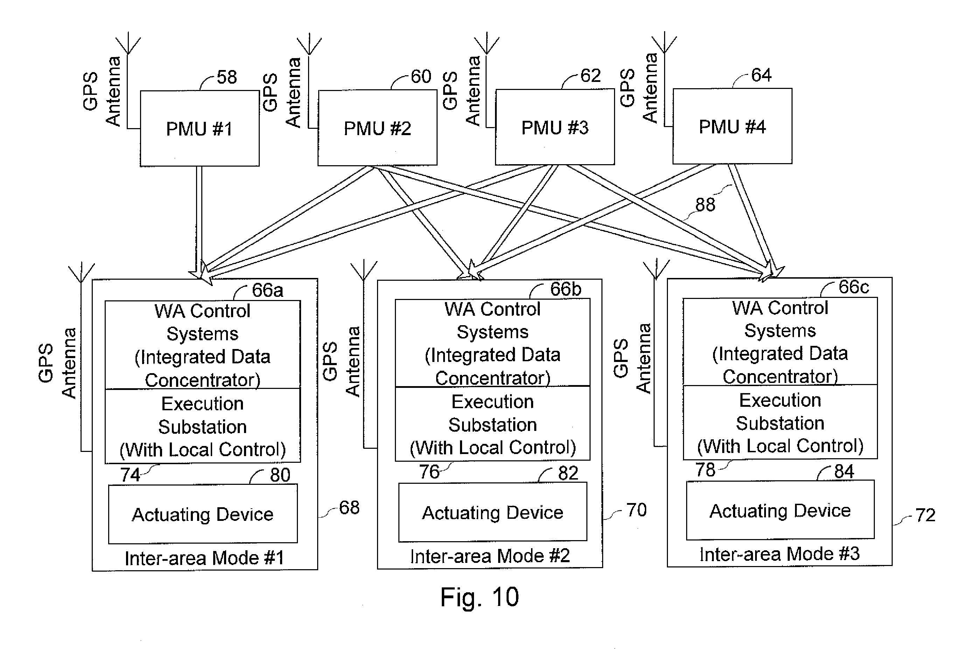

Figure 10 schematically shows a preferred embodiment of a power network having the fault-tolerant control of the present invention. Four PMUs 58, 60, 62, 64, each having a GPS antenna, are installed in the network and are each connected to one or more of three inter-area mode units 68, 70, 72. (Specifically, inter-area mode 68 is observable from PMUs 58, 60, 62, inter-area mode 70 is observable from PMUs 60 and 62, and inter-area mode 72 is observable from PMUs 60, 62 and 64.) The connection may be via fibre optics 88. Each inter-area mode unit 68, 70, 72 comprises an execution substation 74, 76, 78, an actuating device 80, 82, 84, a WA control system 66a, 66b, 66c, having an integrated data concentrator, and has a GPS antenna.

In an operational scenario in which the three inter-area modes are poorly damped and observable from multiple locations, the power network of Figure 10 functions in the following manner. Each of the PMUs may provide a feedback signal. PMU data is GPS time stamped and sent in the form of synchronised phasors via the specific connections to the inter-area mode units. In the execution substation of the inter-area mode units a WA MISO control algorithm of the present invention computes a control action for closed loop control. This control action provides appropriate control to a local control device such as a FACTS device (for example, a shunt variance compensator or thyristor controlled series compensator).

## Configuration III

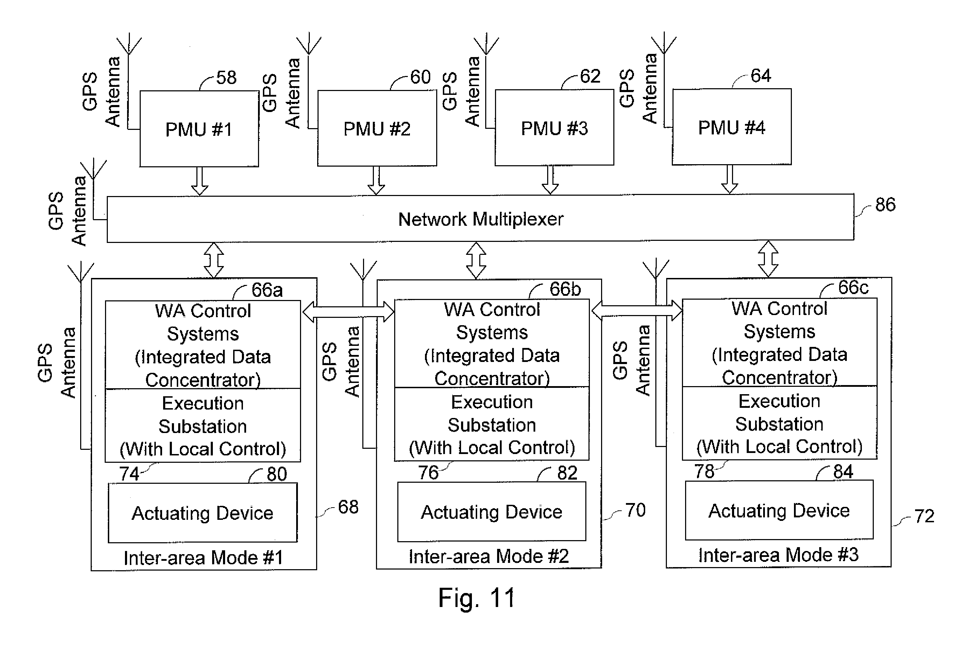

Figure 11 schematically shows an alternative embodiment of a power network having the fault-tolerant control of the present invention. Four PMUs 58, 60, 62, 64, each having a GPS antenna, are installed in the network and are each connected to a single network multiplexer 86. Three inter-area mode units 68, 70, 72 are in connection with each other and are in bi-directional contact with the network multiplexer 86. Each inter-area mode unit may function as a master system or as a slave system. Each inter-area mode unit comprises an execution substation 74, 76, 78, an actuating device 80, 82, 84, a WA control system 66a, 66b, 66c having an integrated data concentrator, and has a GPS antenna.

In an operational scenario in which the three inter-area modes are poorly damped and observable from multiple locations, the power network of Figure 11 functions in the following manner. Each of the PMUs may provide a feedback signal from their remote location. PMU data is GPS time stamped and sent to the associated inter-area mode unit via the network multiplexer. In each execution substation of the inter-area mode units a WA MIMO control algorithm of the present invention computes a control action for closed loop control. Consequently, there are redundant wide area controllers in each execution substation operating as master-slave arrangement. Multiple input signals to the inter-area mode units are obtained in the form of synchronized phasors. Each WA control system receives the same input i.e. all the PMU measurements. However, in normal operation only one pre-specified WA control system provides a control signal to all the local control devices. Hence, one WA control system in one of the local substations provides control signals to all local substations. This reduces the transmission of control signals to a remote location by one.

In Configurations I, II and III there are two notable situations. Firstly, it is possible that remote signals (for example, PMU measurements) received at the wide area control platform are faulty. (Such faulty signals are marked with a bad data quality flag and set to zero or disconnected.) Consequently, a time delay of the PMU measurement occurs. The time delay is the difference between PMU time stamp for the currently processed time slot and the time stamp of the measured signal on the integrated data concentrator. Advantageously, even where the time delay is larger than a predetermined threshold then the control algorithm of the present invention will continue to function effectively. This is enabled because there are a number of control loops supporting a single mode and so where a faulty signal occurs, the other control loops will continue to support the mode. It is noted that in Configuration III, if a sufficient amount of measured data is not available in the master local substation based WA control system, but such data is available in a further WA control system, then the latter WA control system will be the master and former will be slave.

Secondly, it is possible that all remote signals received at the wide area control platform are faulty. Where the time delay of each PMU measurement is larger than a predetermined threshold then wide area control is aborted and local control is activated.

The skilled man will be aware that various alternatives and modifications are possible which fall within the scope of the present invention.

- The present invention is advantageous for any multivariable configuration, such as SIMO, MISO or MIMO.

- The present invention may be utilised for any fast acting device (not only a FACTS device) such as AVR, direct load modulation, HVDC etc.

- Whilst the above description defines superposition as a simple sum over all partial controllers' contributions, alternative operations may be used. It is possible to utilise any operation corresponding to a superposition, such as selecting the maximum value or the sum of weighted values, on the condition that the requirements of the application are met.

- Different approaches can be used to design the partial POD controllers contributing to the overall fault tolerant behaviour, for example, a lead-lag effect POD controller or a phasor POD controller.

- The design of the partial POD controllers of the present invention can be used to form a transfer matrix which in turn can be converted into its state-space realization. In this form, a multivariable block is obtained that can be systematically modified. For example, such a multivariable block can be optimally reduced using the balanced truncation techniques. In this way, it will still keep the "passive" fault tolerant property it was originally designed for.

- The controller synthesis of the present invention is a model-based technique which requires a linear dynamic model to start working with. This can be obtained not only through a linearization of a physical power system model but also through application of some model identification techniques listed in the above bullet points. The most suitable model representation for identification of MIMO models transpires to be the state-space realization. However, a realization through a set of SISO models can be considered for identification and controller design purposes.

- The controller synthesis of the present invention is based on a linear model which is only valid for a particular operating point. With a changing operation point (e.g. different load scenario, line or generator trip etc.), the linear model can be changed/replaced with an alternative linear model and the same controller synthesis applied again. A switching or blending technique can then be applied (gain-scheduling) to obtain the overall control.

- During design stage a set of probable linearized models could be considered independent of experience. These system operating conditions could be selected from a contingency screening method.

- In order to maximize the probability of successful design of a passive fault tolerant controller of the present invention, the number of different residues (prior to their grouping into similar cluster with regard to their angles) may be maximised. The technique described by the applicant in European Patent application number 08156785, may be used. Specifically, this is based on quadrupling the number of all possible solutions/residues through separate considerations of leading and lagging compensators to both types of feedbacks positive and negative.

- The present invention discloses four different architectures each comprising a wide area control system. A wide area MISO control system at each execution substation controls the local device only. A wide area MIMO control system at each execution substation with Master-Slave architecture may control connected devices. However, depending on the available signals, the master and slave operation of a single wide area control system can be switched at any time to another device. This provides a hardware redundancy and fault tolerance against delay or loss of multiple PMU signals.

**Claims**

1. A fault-tolerant method of controlling electromechanical oscillations in a power system, comprising;

   - extracting information about each critical oscillatory mode of an oscillation from a model, wherein said step of extracting further comprises mode selection (26) and residue selection (32) subject to maximisation of the magnitude of the residues over all input and output signals of the model,
   - grouping (38, 40) the selected residues for each critical oscillatory mode,

- designing (44) a partial damping controller for each selected critical oscillatory mode using residues from the same group,
- applying a superposition operation to each partial damping controller to produce a multivariable damping controller, and
- applying the multivariable damping controller to one or more actuating devices in the power system to control electromechanical oscillations.

2. The method according to claim 1, wherein the model is determined (20) through linearization or identification from phasor measurements.

3. The method according to claims 1 and 2, wherein the step of grouping further comprises

   - ranking (38) the selected residues by residue angle magnitude,
   - grouping (40) the selected residues with other selected residues having a similar residue angle.

4. The method according to claim 3, wherein the similar residue angle is within $\pm 30°$ from the maximum residue angle.

5. A fault-tolerant controller of electromechanical oscillations in a power system, the controller comprising;

   - at least one phasor measurement unit (58, 60, 62, 64) obtaining phasor data signals including oscillating mode signals,
   - at least one wide area control system (66) receiving the phasor data signals from the phasor measurement unit (58, 60, 62, 64),
   - at least one actuating device (80, 82, 84) for receiving a control signal from the wide area control system (66),

   wherein the wide area control system performs the fault tolerant control method of claims 1 to 5.

6. The fault-tolerant controller according to claim 5, further comprising a network multiplexer (86), wherein the network multiplexer receives signals from the at least one phasor measurement unit (58, 60, 62, 64), and wherein the wide area control system (66) is located with one actuating device (82) and has a bi-directional direct connection to

   - the network multiplexer (86), and
   - at least one further actuating device ((80, 84).

7. The fault-tolerant controller according to claim 5, wherein a wide area control system (66a, 66b, 66c) is located with each actuating device ((80, 82, 84), and wherein each wide area control system has a direct connection (88) with at least two phasor measurement units(58, 60, 62, 64) .

8. The fault-tolerant controller according to claim 5, further comprising a network multiplexer (86), wherein the network multiplexer receives signals from the at least one phasor measurement unit (58, 60, 62, 64), and wherein a wide area control system (66a, 66b, 66c) is located with each actuating device (68, 70, 72) and has a bi-directional direct connection to

   - the network multiplexer, and
   - at least one further actuating device.

9. The fault-tolerant controller according to any of claims 5 to 8, wherein each of the phasor measurement units, the wide area control systems and the actuating devices have a time stamping means.

10. A computer program for controlling electromechanical oscillations in a power system, which computer program is loadable into an internal memory of a digital computer and comprises computer program code means to make, when said program is loaded in said internal memory, the computer execute the functions of the controller according to claim 5.

Fig. 1

m – output signals

12

p – input signals

Fig. 2

Fig. 3

Fig. 4

Fig. 5a

Fig. 5b

Fig. 5c

Fig. 6

EP 2 299 555 A1

Fig. 7

Fig. 8

Fig. 9

EP 2 299 555 A1

GPS Antenna

~58
PMU #1

GPS Antenna

~60
PMU #2

GPS Antenna

~62
PMU #3

GPS Antenna

~64
PMU #4

88

GPS Antenna

66a
WA Control
Systems
(Integrated Data
Concentrator)

Execution
Substation
(With Local Control)

74 / 80

Actuating Device

Inter-area Mode #1

68

GPS Antenna

66b
WA Control
Systems
(Integrated Data
Concentrator)

Execution
Substation
(With Local Control)

76 / 82

Actuating Device

Inter-area Mode #2

70

GPS Antenna

66c
WA Control
Systems
(Integrated Data
Concentrator)

Execution
Substation
(With Local Control)

78 / 84

Actuating Device

Inter-area Mode #3

72

Fig. 10

GPS Antenna

GPS Antenna

GPS Antenna

GPS Antenna

| PMU #1 ⌐58 | PMU #2 ⌐60 | PMU #3 ⌐62 | PMU #4 ⌐64 |
|---|---|---|---|

GPS Antenna

| Network Multiplexer | ⌐86 |
|---|---|

GPS Antenna

GPS Antenna

GPS Antenna

| WA Control Systems (Integrated Data Concentrator) ⌐66a | WA Control Systems (Integrated Data Concentrator) ⌐66b | WA Control Systems (Integrated Data Concentrator) ⌐66c |
|---|---|---|
| Execution Substation (With Local Control) | Execution Substation (With Local Control) | Execution Substation (With Local Control) |
| 74⌐  ⌐80 | 76⌐  ⌐82 | 78⌐  ⌐84 |
| Actuating Device  ⌐68 | Actuating Device  ⌐70 | Actuating Device  ⌐72 |
| Inter-area Mode #1 | Inter-area Mode #2 | Inter-area Mode #3 |

Fig. 11

Europäisches
Patentamt

European
Patent Office

Office européen
des brevets

# EUROPEAN SEARCH REPORT

**Application Number**

EP 09 17 0800

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/116929 A2 (ABB RESEARCH LTD [CH]; KORBA PETR [CH]; LARSSON MATS [CH]) 2 October 2008 (2008-10-02) * page 10, line 6 - page 11, line 25 * * page 4, line 9 - page 5, line 26 * * figures 2-3F * * abstract * | 1-3,5,10 | INV. H02J3/24 |
| X | US 2009/099798 A1 (GONG YANFENG [US] ET AL) 16 April 2009 (2009-04-16) * paragraph [0024] - paragraph [0028] * * figures 3,4 * | 5-6,9 | |
| A | | 1-4 | |
| X | WO 2006/131017 A2 (ABB RESEARCH LTD [CH]; KORBA PETR [CH]; OUDALOV ALEXANDER [CH]; LARSSO) 14 December 2006 (2006-12-14) * paragraph [0009] - paragraph [0011] * * paragraph [0026] - paragraph [0037] * * figures 1-4 * * abstract * | 5,9 | |
| A | | 1-4 | |
| A | RUSEJLA SADIKOVIC ET AL: "Application of FACTS devices for damping of power system oscillations" POWER TECH, 2005 IEEE RUSSIA, IEEE, PISCATAWAY, NJ, USA, 27 June 2005 (2005-06-27), pages 1-6, XP031254797 ISBN: 978-5-93208-034-4 * the whole document * | 1-10 | TECHNICAL FIELDS SEARCHED (IPC) H02J |

The present search report has been drawn up for all claims

| Place of search | Date of completion of the search | Examiner |
|---|---|---|
| Munich | 25 February 2010 | Bronold, Harald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 17 0800

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2010

| Patent document cited in search report | | Publication date | Patent family member(s) | | Publication date |
|---|---|---|---|---|---|
| WO 2008116929 | A2 | 02-10-2008 | CN 101647173 A<br>EP 2140533 A2<br>US 2010023179 A1 | | 10-02-2010<br>06-01-2010<br>28-01-2010 |
| US 2009099798 | A1 | 16-04-2009 | WO 2009048964 A1 | | 16-04-2009 |
| WO 2006131017 | A2 | 14-12-2006 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1737098 A

- EP 08156785 A

**Non-patent literature cited in the description**

- **R. Sadikovic et al.** Application of FACTS Devices for Damping of Power System Oscillations. *proceedings of the Power Tech conference 2005,* 27 June 2005